(19) Europäisches Patentamt / European Patent Office / Office européen des brevets

(11) EP 2 759 788 B1

(12) EUROPEAN PATENT SPECIFICATION

(45) Date of publication and mention
of the grant of the patent:
**30.03.2016 Bulletin 2016/13**

(51) Int Cl.:
*F25B 49/02* (2006.01)      *F04B 11/00* (2006.01)
*F04B 39/00* (2006.01)      *F04B 49/02* (2006.01)
*F04B 49/06* (2006.01)

(21) Application number: **14151555.1**

(22) Date of filing: **17.01.2014**

(54) **Device for reducing vibration in compressor and control method thereof**

Vorrichtung zur Verringerung der Vibration in einem Kompressor und Steuerungsverfahren dafür

Dispositif pour réduire les vibrations dans un compresseur et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2013 KR 20130010013**

(43) Date of publication of application:
**30.07.2014 Bulletin 2014/31**

(73) Proprietor: **LG Electronics Inc.
Youngdungpo-gu
Seoul 150-721 (KR)**

(72) Inventors:
• **Lee, Juhyoung**
  **153-802 Seoul (KR)**
• **Noh, Jinhee**
  **153-802 Seoul (KR)**

(74) Representative: **Vossius & Partner
Patentanwälte Rechtsanwälte mbB
Siebertstrasse 3
81675 München (DE)**

(56) References cited:
**US-A- 4 724 680      US-A1- 2009 093 911
US-B1- 6 206 643**

EP 2 759 788 B1

Description

<u>TECHNICAL FIELD</u>

The present invention relates to a device for reducing vibration in a compressor and a method for controlling reducing the vibration in the compressor.

<u>BACKGROUND</u>

A refrigeration cycle means a series of cycles of compression, condensation, expansion, and evaporation, and is used in an air conditioner. The air conditioner performs heating by using condensation heat of refrigerant and performs cooling by using evaporation heat.

A device that compresses the refrigerant by configuring the refrigeration cycle is a compressor. The compressor is connected with a condenser or an evaporator through a pipe where the refrigerant flows in order to configure the refrigeration cycle.

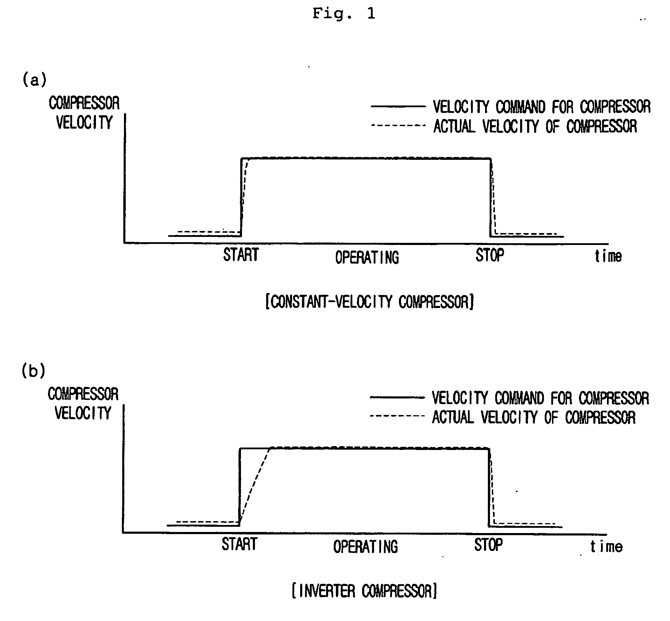

As the compressor, a constant-velocity compressor and an inverter compressor are primarily used and the velocity control pattern for the constant-velocity compressor and the inverter compressor is illustrated in FIG. 1 in the related art. FIG. 1A illustrates an operating velocity of the compressor with time when operating the constant-velocity compressor and FIG. 1B illustrates a progress for the operating velocity of the compressor with time when operating the inverter compressor.

Referring to FIG. 1A, the constant-velocity compressor is abruptly accelerated up to the operating velocity in starting and abruptly stopped in stopping.

Further, referring to FIG. 1B, the inverter compressor is accelerated up to the operating velocity relatively slowly as compared with the constant-velocity compressor, but abruptly stopped in stopping like the constant-velocity compressor.

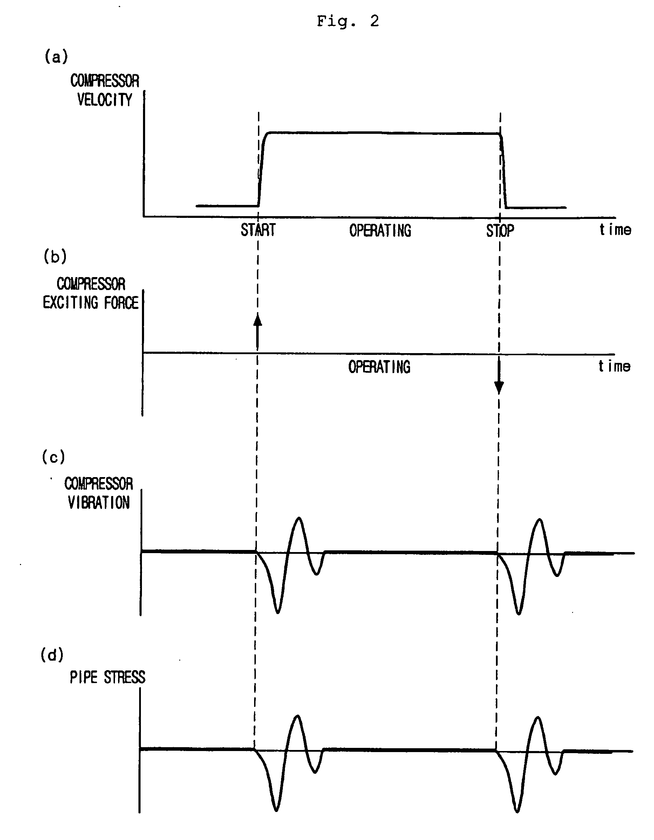

FIG. 2A illustrates a velocity control pattern for a constant-velocity compressor in the related art, FIG.2B illustrates exiting force generated in the compressor by a velocity control by FIG. 2A, FIG. 2C illustrates vibration generated in the compressor by the velocity control by the FIG. 2A, and FIG. 2D illustrates stress that acts on a pipe connected with the compressor by the velocity control by FIG. 2A.

Referring to FIG. 2, the exciting force acts on the compressor when the compressor starts and stops, and as a result, the compressor vibrates and stress having the same pattern as the vibration of the compressor acts on even the pipe connected with the compressor.

Therefore, when the compressor is operated according to the velocity control pattern in the related art, the stress acts on the pipe connected with the compressor whenever the compressor starts or stops, and as a result, the pipe is broken.

US 6206643 B1 relates to a compressor for a cooling apparatus, and more particularly, to a method for controlling a reciprocating compressor having variable capacity, which is capable of varying a rotational speed thereof. US 2009/093911 (A1) relates to compressors, and more particularly, to vibration protection of a compressor system with a variable speed compressor.

<u>SUMMARY</u>

In order to solve the problem, the present invention has been made in an effort to provide a device for reducing vibration in a compressor and a method for controlling reducing the vibration that minimize the vibration in the compressor when the compressor starts and stops.

A device for reducing vibration in a compressor according to an embodiment of the present invention includes: a compressor controlled to be operated at a target operating velocity after starting; a power supply unit supplying power to the compressor; and a control unit controlling the power supply unit so that a magnitude or a phase of the power supplied to the compressor is changed, wherein the control unit controls the power supply unit so that the vibration generated in the compressor is offset because exciting force is generated in the compressor with a predetermined time interval at multiple times when the compressor starts or when the compressor stops during a target operation velocity operating of the compressor.

Further, the predetermined time interval may correspond to 1/2 of a natural frequency of the compressor vibration.

In addition, when the compressor starts, the multiple times of exciting force may include first exciting force and second exciting force generated after the first exciting force is generated and having a smaller magnitude than the first exciting force.

Moreover, the first exciting force may be exciting force generated by current applied to the compressor so that the compressor is operated at a first velocity lower than a target operating velocity, and the second exciting force may be exciting force generated by the current applied to the compressor so that the compressor operated at the first velocity is operated at the target operating velocity.

In addition, the first velocity may correspond to 1/2 of the target operating velocity of the compressor.

Moreover, when the compressor stops, the multiple times of exciting force may include third exciting force and fourth exciting force generated after the third exciting force is generated and having a smaller magnitude than the third exciting force.

Further, the third exciting force may be exciting force generated by the current applied to the compressor so that the compressor is operated at the first velocity lower than the target operating velocity, and the fourth exciting force may be exciting force generated by the current applied to the compressor so that the compressor operated at the first velocity stops.

In addition, the first velocity may correspond to 1/2 of the target operating velocity of the compressor.

Further, the multiple times of exciting force may be generated by impulse current supplied to the compressor.

A device for reducing vibration in a compressor according to another embodiment of the present invention includes: a compressor constituting a refrigeration cycle and operable at a target operating velocity; a power supply unit supplying power to the compressor; and a control unit controlling the power supply unit so that a magnitude or a phase of the power supplied to the compressor is changed, wherein the control unit controls the power supply unit so that the compressor is accelerated or decelerated to a first velocity which is less than the target operating velocity when the compressor starts or when the compressor stops while being operated at the target operating velocity.

Further the control unit may control the power supply unit so that the compressor is primarily accelerated up to the first velocity and thereafter, secondarily accelerated up to the target operating velocity after a predetermined elapsed when the compressor starts.

Further, the predetermined time may correspond to 1/2 of a natural frequency of the compressor vibration.

In addition, the control unit may control the power supply unit so that the compressor is primarily decelerated up to the first velocity from the target operating velocity and thereafter, stops after a predetermined time elapsed when the compressor stops.

Further, the predetermined time may correspond to 1/2 of a natural frequency of the compressor vibration.

Moreover, the first velocity may be a velocity which is half of the target operating velocity.

A method for controlling reducing vibration in a compressor according to yet another embodiment of the present invention includes: primarily accelerating a stopped compressor up to a first velocity; and secondarily accelerating the compressor up to a target operating velocity, wherein a time as long as 1/2 of a natural frequency of the compressor vibration from a primary acceleration start time of the compressor up to a secondary acceleration start time of the compressor.

Moreover, the first velocity may be a velocity which is half of the target operating velocity.

In addition, the method may further include: primarily decelerating the compressor operated at the target operating velocity up to the first velocity; and secondarily decelerating the compressor to be completely stopped.

Further, a time as long as 1/2 of a natural frequency of the compressor vibration may elapse from a primary deceleration start time of the compressor up to a secondary deceleration start time of the compressor.

Moreover, first exciting force of the compressor generated in the primary acceleration may be larger than second exciting force of the compressor generated in the secondary acceleration, and third exciting force of the compressor generated in the primary deceleration may be larger than fourth exciting force of the compressor generated in the secondary deceleration.

According to the present invention, vibration generated in a compressor can be minimized when the compressor starts and stops.

Therefore, stress generated in a pipe connected with the compressor can be minimized, and as a result, a breakage of the pipe is prevented.

The details of one or more embodiments are set forth in the accompanying drawings and the description below. Other features will be apparent from the description and drawings, and from the claims.

## BRIEF DESCRIPTION OF THE DRAWINGS

FIG. 1 is a graph illustrating an operating velocity pattern of a compressor in related art, and FIG. 1A illustrates the operating velocity pattern in the case of a constant-velocity compressor and FIG. 1B illustrates the operating velocity pattern in the case of an inverter compressor.

FIG. 2A illustrates a velocity control pattern for the constant-speed compressor in the related art, FIG. 2B illustrates exiting force generated in the compressor by a velocity control by FIG. 2A, FIG. 2C illustrates vibration generated in the compressor by the velocity control by the FIG. 2A, and FIG. 2D illustrates stress that acts on a pipe connected with the compressor by the velocity control by FIG. 2A.

FIG. 3 is a configuration diagram illustrating a configuration of a device for reducing vibration in a compressor according to an embodiment of the present invention.

FIG. 4A illustrates a velocity control pattern for a device for reducing vibration in a compressor according to an embodiment of the present invention, FIG. 4B illustrates exiting force generated in the compressor by a velocity control by FIG. 4A, FIG. 4C illustrates vibration generated in the compressor by the velocity control by the FIG. 4A, and FIG. 4D illustrates stress that acts on a pipe connected with the compressor by the velocity control by FIG. 4A.

FIG. 5A illustrates a velocity control pattern by the device for reducing vibration in a compressor according to an embodiment of the present invention and FIG. 5B is a graph illustrating a magnitude of current provided to the compressor for the velocity control by FIG. 5A.

FIG. 6 is a flowchart illustrating a method for controlling reducing vibration in the compressor according to an embodiment of the present invention.

FIG. 7 illustrates an acceleration pattern to be used in the method for controlling reducing vibration in the compressor according to another embodiment of the present invention, and FIG. 7A is a graph illustrating an acceleration pattern when a compressor velocity is accelerated in two stages, FIG. 7B is a graph illustrating an acceleration pattern when the compressor velocity is accelerated in three stages, and FIG. 7C is a graph illustrating an acceleration pattern when the compressor velocity is accelerated in four stages.

FIG. 8 illustrates an acceleration pattern of a method for controlling reducing vibration in a compressor according to another embodiment of the present invention and is a graph illustrating a result of Equation 2 below.

## DETAILED DESCRIPTION OF THE EMBODIMENTS

Hereinafter, a configuration of a device for reducing vibration in a compressor according an embodiment of the present invention will be described in detail with reference to the accompanying drawings.

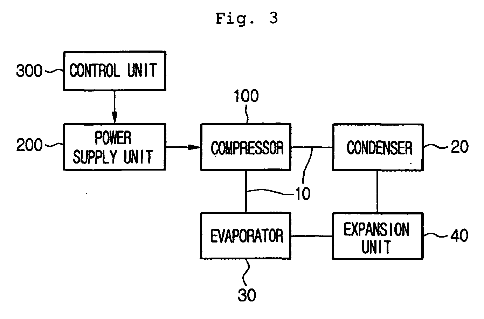

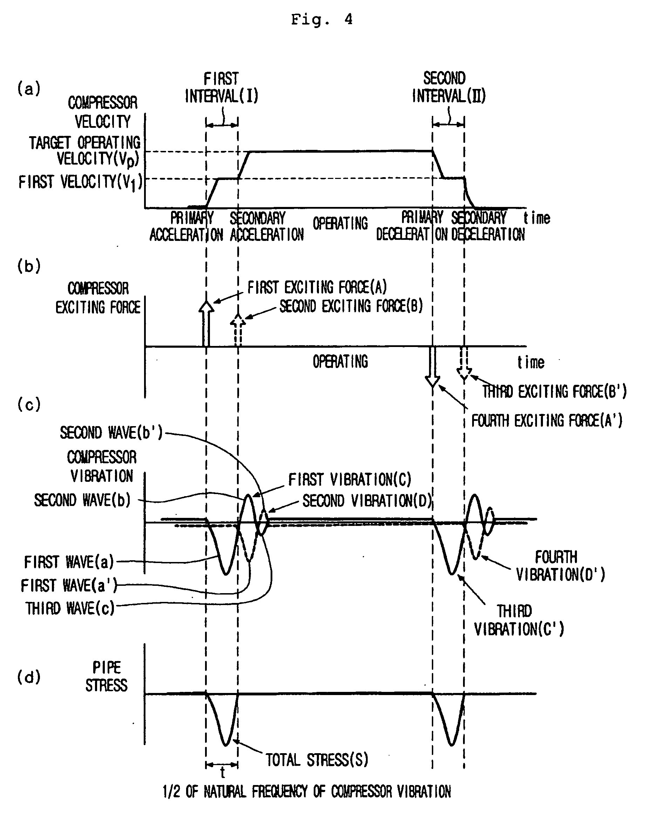

FIG. 3 is a configuration diagram illustrating a configuration of a device for reducing vibration in a compressor according to an embodiment of the present invention. Further, FIG. 4A illustrates a velocity control pattern by the device for reducing vibration in a compressor according to the embodiment of the present invention,

Referring to FIG. 3, the device for reducing vibration in a compressor according to the embodiment of the present invention may include a compressor 100, a power supply unit 200, and a control unit 300.

The compressor 100 is connected with a pipe 10. As one example, the compressor 100 constitutes a refrigeration cycle together with a condenser 20, an evaporator 30, and an expansion unit 40 and serves to compress and discharge refrigerant. As one example, the compressor 100 is connected with the condenser 20 and the evaporator 30 through the pipe 10.

The compressor 100 may be operated at a target operating velocity Vp until a stop signal is input after starting.

The power supply unit 200 serves to supply power to the compressor 100. The power supply unit 200 may supply power by changing a magnitude and a phase of power provided to the compressor 100 according to a control by the control unit 300 to be described below.

The control unit 300 controls the power supply unit 200 to damp vibration which may be generated in the compressor 100 by the exciting force when the exciting force is generated temporally separately at multiple times, that is, with a difference of a set time at the time when the compressor 100 starts or stops. That is, the control unit 300 controls the power supply unit 200 so that the vibration generated in the compressor in starting or stopping is minimized.

Herein, the multiple times of exciting force may include first exciting force (see A of FIG. 4) generated in starting, that is, when a starting signal is input into the compressor 100 and second exciting force (see B of FIG. 4) generated just after the first exciting force A.

The first exciting force A and the second exciting force B are generated with a temporal separation which is 1/2 of a natural frequency of the vibration of the compressor 100 as one example as illustrated in FIG. 4.

Herein, the first exciting force A may be exciting force generated by current applied to the compressor 100 so that the compressor 100 is operated at a velocity (first velocity, V1) which is half of the target operating velocity Vp to be described below.

In addition, the second exciting force B may be exciting force generated by current applied to the compressor 100 so that the compressor 100 operated at the velocity (first velocity, V1) which is half of the target operating velocity is operated at the target operating velocity Vp.

A magnitude of the first exciting force A may be relatively larger than that of the second exciting force B.

As a result, first vibration C generated in the compressor 100 by the first exciting force A may include a first wave a, a second wave b, and a third wave c illustrated in FIG. 4.

In addition, second vibration D generated in the compressor 100 by the second exciting force B may include a first wave a' and a second wave b' illustrated in FIG. 4. Herein, the second wave b of the first vibration C is equal to the first wave a' of the second vibration D in magnitude and opposite in direction, and as a result, both exciting forces are offset and similarly, the third wave c of the first vibration C is equal to the second wave b' of the second vibration in magnitude and opposite in direction, and as a result, both exciting forces are offset.

However, the first wave a of the first vibration C generated in a first interval I which is an interval before the second exciting force B is generated after the first exciting force A is generated is not offset but remains.

Therefore, stress equivalent to the vibration generated in the compressor 100 is generated in even the pipe 10 connected with the compressor 100 in the first interval I. However, all vibrations of the compressor 100 are offset and thus not generated after the first interval I, and as a result, the stress does not act on even the pipe 10. Therefore, total stress S that acts on the pipe 10 when the compressor 100 starts becomes stress generated in the first interval I as illustrated in FIG. 4.

After the first interval I, the compressor 100 may be operated at the target operating velocity Vp until a stopping signal of the compressor is recognized.

Further, the aforementioned multiple times of exciting force may include third exciting force (see A' of FIG. 4) generated in stopping, that is, when the stopping signal is input into the compressor 100 and fourth exciting force (see B' of FIG. 4) generated just after the third exciting force A'.

The third exciting force A' and the fourth exciting force B' are generated with a temporal separation which is 1/2 of the natural frequency of the vibration of the compressor 100 as one example as illustrated in FIG. 4.

Herein, the third exciting force A' may be exciting force generated by current applied to the compressor 100 so that the compressor 100 is operated at the velocity (first velocity, V1) which is half of the target operating velocity of the compressor 100.

In addition, the fourth exciting force B' may be exciting force generated by current applied to the compressor 100 so that the compressor 100 completely stops at the velocity (first velocity, V1) which is half of the target operating velocity of the compressor 100.

A magnitude of the third exciting force A' may be relatively larger than that of the fourth exciting force B'.

As a result, the third vibration C' is generated in the compressor 100 by the third exciting force A' and the fourth vibration D' is generated in the compressor 100 by the fourth exciting force B'. Since the aforementioned description of the first vibration C and the second vibration D can be applied to the third vibration C' and the fourth vibration D' as it is, the description will be omitted.

Similarly as the first interval I, since a second interval II is an interval before the fourth vibration D' is generated, the third vibration C' is not offset but remains.

Therefore, stress equivalent to the vibration generated in the compressor 100 is generated in even the pipe 10 connected with the compressor 100 in the second interval II. However, all vibrations of the compressor 100 are offset and thus not generated after the second interval II, and as a result, the stress does not act on even the pipe 10. Therefore, total stress S that acts on the pipe 10 when the compressor 100 stOPS becomes stress generated in the second interval II as illustrated in FIG. 4.

Therefore, the stress that acts on the compressor 100 and the pipe 10 connected to the compressor 100 is minimized by the device for reducing vibration in the compressor according to the present invention.

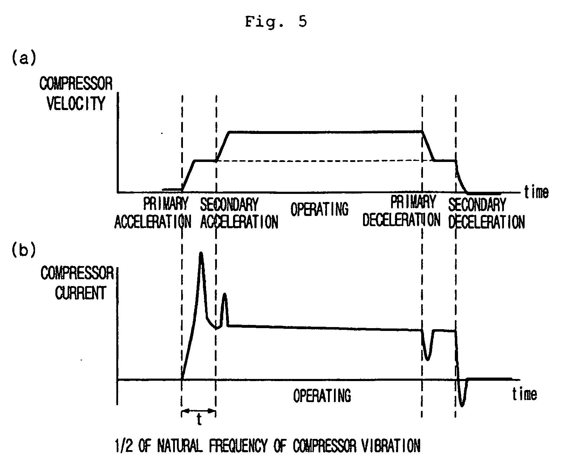

Further, the first exciting force A and the third exciting force A', and the second exciting force B and the fourth exciting force B' that are described above may be caused by supplying a current pattern illustrated in FIG. 5 to the compressor 100.

As one example, the first exciting force A and the third exciting force A', and the second exciting force B and the fourth exciting force B' may be generated by impulse current illustrated in FIG. 5, but the present invention is not limited thereto.

Further, the control unit 300 primarily accelerates the compressor up to the first velocity V1 which is less than the target operating velocity Vp at the time of starting the compressor 100 and thereafter, secondarily accelerates the compressor up to the target operating velocity Vp after time elapsed.

Herein, a time when the secondary acceleration starts may be a time after 1/2 of the natural frequency of the vibration of the compressor 100 elapsed from the time when the primary acceleration starts. In addition, the first velocity V1 may be half of the target operating velocity Vp and in this case, the vibration generated in the compressor may be minimized as described above.

Further, the control unit 300 primarily decelerates the compressor up to the first velocity (see V1 of FIG. 4) which is less than the operating velocity (see Vp of FIG. 4, since the compressor 100 is operated at the target operating velocity, the operating velocity and the target operating velocity are equal to each other) when the compressor 100 stops and thereafter, secondarily decelerates the compressor 100 so that the compressor 100 completely stops after time elapsed.

Herein, a time when the secondary deceleration starts may be a time after 1/2 of the natural frequency of the vibration of the compressor 100 elapsed from the time when the primary deceleration starts. In addition, the first velocity V1 may be half of the operating velocity Vp and in this case, the vibration generated in the compressor 100 may be minimized as described above.

Hereinafter, a configuration of a method for controlling reducing vibration in the compressor according an embodiment of the present invention will be described in detail with reference to the accompanying drawings.

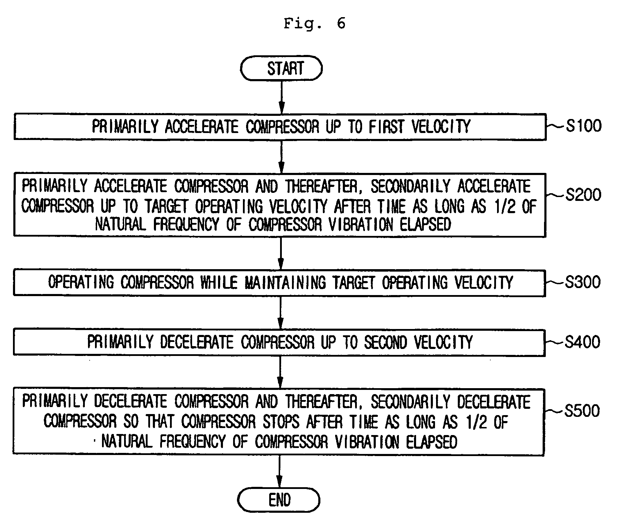

FIG. 6 is a flowchart illustrating a method for controlling reducing vibration in the compressor according to an embodiment of the present invention.

Hereinafter, the method for controlling reducing vibration in the compressor according to the embodiment of the present invention is described on the presumption that an initial state of the compressor 100 is a stop state, but this is for easy description and the present invention is not limited thereto.

Referring to FIG. 6, first, the compressor 100 which is in the stop state is primarily accelerated up to a first velocity (S100). Herein, the first velocity may be a velocity corresponding to half of a target operating velocity to be described below, but is not limited thereto.

In addition, after a time as long as 1/2 of a natural frequency of the vibration of the compressor 100 from a time when the primary acceleration starts, the compressor 100 is secondarily accelerated up to the target operating velocity. The primary acceleration and the second acceleration may be achieved by supplying impulse current corresponding to maximum current to the compressor 100 as one example.

Thereafter, the compressor 100 is operated while constantly maintaining the target operating velocity (S300).

Thereafter, the compressor 100 is primarily decelerated up to a second velocity (S400). Herein, the second velocity may be a velocity corresponding to half of a target operating velocity similarly as the first velocity, but is not limited thereto.

In addition, after a time as long as 1/2 of a natural frequency of the vibration of the compressor 100 from a time when the primary deceleration starts, the compressor 100 is secondarily decelerated so that the compressor 100 completely stops (S500). The primary deceleration and the secondary deceleration may be achieved by supplying the impulse current corresponding to minimum current.

A series of steps from the start to the stoppage of the compressor 100 are completed through steps S100 to S500.

Hereinafter, a method for controlling reducing vibration in a compressor according another embodiment of the present invention will be described in detail with reference to the accompanying drawings.

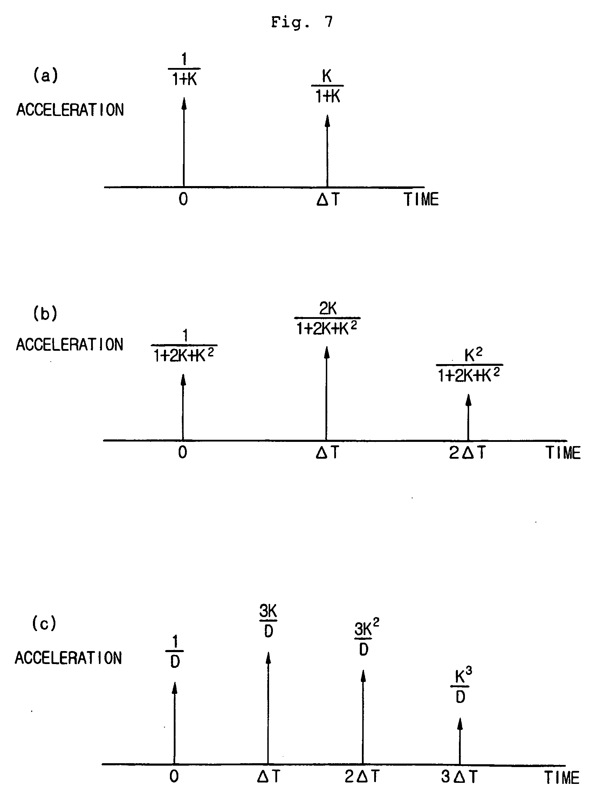

FIG. 7 illustrates an acceleration pattern to be used in the method for controlling reducing vibration in the compressor according to another embodiment of the present invention, and FIG. 7A is a graph illustrating an acceleration pattern when a compressor velocity is accelerated in two stages, FIG. 7B is a graph illustrating an acceleration pattern when the compressor velocity is accelerated in three stages, and FIG. 7C is a graph illustrating an acceleration pattern when the compressor velocity is accelerated in four stages.

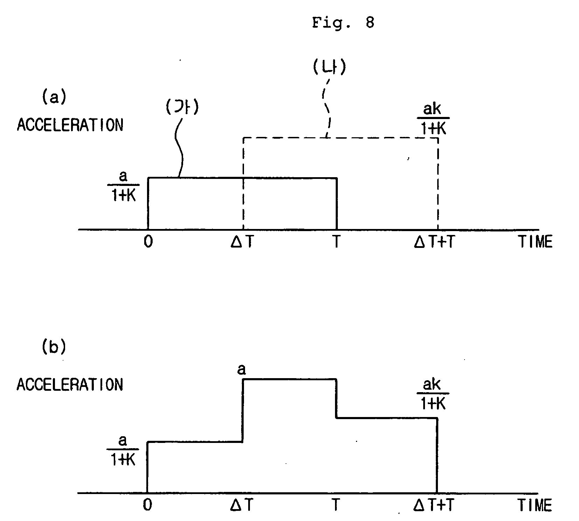

Further, FIG. 8 is a graph illustrating a result of Equation 2 below.

Hereinafter, accelerating the velocity of the compressor will be described as an example for easy description, but following contents may be just applied to even decelerating the compressor 100.

In the case where the velocity of the compressor 100 is accelerated, when the velocity is accelerated as an impulse pattern in two stages as illustrated in FIG. 7A, the velocity is accelerated as the impulse pattern in three stages as illustrated in FIG. 7B, or the velocity is accelerated as the impulse pattern in four stages as illustrated in FIG. 7C, the same effect as the embodiment of the present invention may be achieved. That is, the vibration of the compressor may be minimized when the compressor starts like the object of the present invention.

However, it is extremely difficult to accelerate the velocity of the compressor 100 as the impulse pattern as illustrated in FIGS. 7A, 7B, and 7C. Therefore, hereinafter, an acceleration pattern g(t) of the impulse pattern illustrated in FIGS. 7A, 7B, and 7C and a general acceleration pattern f(t) are subjected to convolution integral to propose the acceleration pattern for the velocity of the compressor 100.

In general, the convolution integral as a kind of integral form may be used to acquire an output signal of a linear system when an input signal and an impulse response of the system.

First, the convolution integral is illustrated in Equation 1 below.

[Equation 1]

$$f(t) * g(t) = \int_{\infty}^{\infty} f(t)g(t-\tau)d\tau$$

It has been already demonstrated that a new function acquired through the convolution integral expressed by Equation 1 above just has features of the existing f(t) and g(t).

When force is excited in two stages as illustrated in FIG. 7A, f(t) = a and g(t) = 1 / (1 + k) (at t = 0), and g(t) = k / (1+k) (at t = ΔT). When both functions are subjected to convolution integral, a result thereof is illustrated as Equation 2 below.

[Equation 2]

$$f(t)*g(t)=\frac{a}{1+k}H(t)-\frac{a}{1+k}H(t-\Delta T)+\frac{ak}{1+k}H(t-T)-\frac{ak}{1+k}H(t-T-\Delta T)$$

$$k=e^{\frac{-\zeta\pi}{\sqrt{1-\zeta^2}}}, \Delta T=\frac{\pi}{\omega\sqrt{1-\zeta^2}}$$

ω = natural frequency of compressor vibration system
ζ = damping ratio of compressor vibration system
a = maximum acceleration of compressor
T = V/a, V = target operating velocity
H(x) = unit step function,
H(x) = 1 (x≥0),
H(x) = 0 (x<0)

In FIGS. 8A and 8B, Equation 2 above is expressed by a graph. In FIG. 8A, an equation corresponding to area (A) is a/(1+k)*H(t)-a/(1+k)*H(t-Δt) and an equation corresponding to area (B) is ak/(1+k)*H(t-T)-ak/(1+k)H(t-T-ΔT). It can be seen that FIG. 8B is acquired by simply summing up areas (A) and (B).

That is, as illustrated in FIG. 8B, when i) the compressor is accelerated at a/(1+k) from 0 sec to ΔT sec, ii) the compressor is accelerated at a from ΔT sec to T sec, iii) the compressor is accelerated at ak/(1+k) from T sec to ΔT+T sec, the vibration is generated in the compressor 100 similarly as the case in which the velocity is accelerated as the impulse pattern in two stages as illustrated in FIG. 7A. Therefore, the vibration in the compressor 100 may be reduced when the compressor 100 is accelerated as illustrated in FIG. 8B.

When force is excited in three stages as illustrated in FIG. 7B, f(t) = a and g(t) = 1 / (1+2k+k$^2$) (at t = 0), g(t) = 2k / (1 + 2k + k$^2$) (at t = ΔT), and g(t) = k$^2$ / (1 + 2k + k$^2$) (at t = 2ΔT). When both functions are subjected to convolution integral, a result thereof is illustrated as Equation 3 below.

[Equation 3]

$$f(t)*g(t)=\frac{a}{1+2k+k^2}H(t)-\frac{a}{1+2k+k^2}H(t-\Delta T)+\frac{2ak}{1+2k+k^2}H(t-T)-\frac{2ak}{1+2k+k^2}H(t-T-\Delta T)+\frac{ak^2}{1+2k+k^2}H(t-2T)-\frac{ak^2}{1+2k+k^2}H(t-2T-\Delta T)$$

ω = natural frequency of compressor vibration system
ζ = damping ratio of compressor vibration system
a = maximum acceleration of compressor
T = V/a, V = target operating velocity
H(x) = unit step function,
H(x) = 1 (x≥0),
H(x) = 0 (x < 0)

That is, even when the velocity of the compressor 100 is accelerated as illustrated in Equation 3, the vibration generated in the compressor 100 may be reduced.

Further, when force is excited in fourth stages as illustrated in FIG. 7C, f(t) = a and g(t) = 1 / D (at t = 0), g(t) = 3k / D (at t = ΔT), g(t) = 3k$^2$ / D (at t = 2ΔT), and g(t) = k$^3$ / D(at t = 3ΔT). When both functions are subjected to convolution integral, a result thereof is illustrated as Equation 4 below.

[Equation 4]

$$f(t)*g(t)=\frac{a}{D}H(t)-\frac{a}{D}H(t\text{-}\Delta T)+\frac{3ak}{D}H(t\text{-}T)-\frac{3ak}{D}H(t\text{-}T\text{-}\Delta T)+\frac{3ak^2}{D}H(t\text{-}2T)-\frac{3ak^2}{D}H(t\text{-}2T\text{-}\Delta T)+\frac{k^3}{D}H(t\text{-}3T)-\frac{k^3}{D}H(t\text{-}3T\text{-}\Delta T)$$

$D = (1+k)^3$
$\omega$ = natural frequency of compressor vibration system
$\zeta$ = damping ratio of compressor vibration system
a = maximum acceleration of compressor
T = V/a, V = target operating velocity
H(x) = unit step function,
$H(x) = 1\ (x\geq0)$,
$H(x) = 0\ (x < 0)$

That is, even when the velocity of the compressor 100 is accelerated as illustrated in Equation 4, the vibration generated in the compressor 100 may be reduced.

**Claims**

1.  A control method for reducing vibration in a compressor (100), wherein the compressor (100) comprises a control unit (300) configured to control the power supply to said compressor (100) so that:

    a) during a first time interval a stopped compressor (100) is primarily accelerated (S100) with a first exciting force up to a first velocity;
    b) during a subsequent second time interval the compressor (100) is secondarily accelerated (S400) with a second exciting force up to a target operating velocity,
    c) said first exciting force of the compressor (100) generated in the primary acceleration is larger than said second exciting force of the compressor (100) generated in the secondary acceleration,
    **characterized in that**
    d) a time interval corresponding to 1/2 of a natural frequency of the compressor vibration elapses from a primary acceleration start time of the compressor (100) up to a secondary acceleration start time of the compressor (100).

2.  The method of claim 1, further comprising:

    primarily decelerating the compressor (100) operated at the target operating velocity up to the first velocity; and
    secondarily decelerating (S500) the compressor (100) to be completely stopped.

3.  The method of claim 2, wherein:

    a time interval corresponding to 1/2 of a natural frequency of the compressor vibration elapses from a primary deceleration start time of the compressor (100) up to a secondary deceleration start time of the compressor (100).

4.  The method of claim 2, wherein:

    third exciting force of the compressor (100) generated in the primary deceleration is larger than fourth exciting force of the compressor (100) generated in the secondary deceleration.

5.  The method of claim 1, wherein the first and second exciting forces are generated by impulse current supplied to the compressor (100).

**Patentansprüche**

1.  Steuerungsverfahren zur Verringerung der Vibration in einem Kompressor (100), wobei der Kompressor (100) eine Steuerungseinheit (300) aufweist, die ausgebildet ist, die Stromzufuhr zum Kompressor (100) so zu steuern, dass

(a) während eines ersten Zeitintervals ein gestoppter Kompressor (100) in einem ersten Schritt (S100) mit einer ersten Antriebskraft auf eine erste Geschwindigkeit beschleunigt wird;
(b) während eines darauffolgenden zweiten Zeitintervals der Kompressor (100) in einem zweiten Schritt (S400) mit einer zweiten Antriebskraft auf eine Ziel-Betriebsgeschwindigkeit beschleunigt wird,
(c) wobei die erste Antriebskraft des Kompressors (100), die während der ersten Beschleunigung erzeugt wird, größer als die zweite Antriebskraft des Kompressors (100) ist, die während der zweiten Beschleunigung erzeugt wird,
**dadurch gekennzeichnet, dass**
(d) von einer ersten Beschleunigungsstartzeit des Kompressors (100) bis zu einer zweiten Beschleunigungsstartzeit des Kompressors (100) ein Zeitinterval entsprechend der halben natürlichen Frequenz der Kompressorvibration vergeht.

**2.** Verfahren nach Anspruch 1, ferner mit den Schritten:

erstes Abbremsen des Kompressors (100), der mit der Ziel-Betriebsgeschwindigkeit betrieben wird, auf die erste Geschwindigkeit; und
zweites Abbremsen (S500) des Kompressors (100) bis zum kompletten Stopp.

**3.** Verfahren nach Anspruch 2, wobei
von einer ersten Bremsstartzeit des Kompressors (100) bis zu einer zweiten Bremsstartzeit des Kompressors (100) ein Zeitinterval entsprechend der halben natürlichen Frequenz der Kompressorvibration vergeht.

**4.** Verfahren nach Anspruch 2, wobei
eine dritte Antriebskraft des Kompressors (100), die während des ersten Abbremsens erzeugt wird, größer als eine vierte Antriebskraft des Kompressors (100) ist, die während des zweiten Abbremsens erzeugt wird.

**5.** Verfahren nach Anspruch 1, wobei die erste und die zweite Antriebskraft durch einen Impulsstrom erzeugt werden, der dem Kompressor (100) zugeführt wird.

**Revendications**

**1.** Procédé de commande permettant de réduire les vibrations dans un compresseur (100), où le compresseur (100) comprend une unité de commande (300) prévue pour commander l'alimentation en courant dudit compresseur (100), de telle manière que :

a) pendant un premier intervalle temporel, un compresseur (100) à l'arrêt est soumis à une accélération primaire (S100) avec une première force d'excitation jusqu'à atteindre une première vitesse ;
b) pendant un deuxième intervalle temporel consécutif, le compresseur (100) est soumis à une accélération secondaire (S400) avec une deuxième force d'excitation jusqu'à atteindre une vitesse de fonctionnement de consigne,
c) la première force d'excitation du compresseur (100) générée lors de l'accélération primaire est supérieure à la deuxième force d'excitation du compresseur (100) générée lors de l'accélération secondaire,
**caractérisé**
d) **en ce qu'**un intervalle temporel correspondant à la moitié d'une fréquence naturelle de vibration du compresseur s'écoule entre un temps de démarrage d'accélération primaire du compresseur (100) jusqu'à un temps de démarrage d'accélération secondaire du compresseur (100).

**2.** Procédé selon la revendication 1, comprenant en outre :

une décélération primaire du compresseur (100) exécutée à la vitesse de fonctionnement de consigne jusqu'à la première vitesse ; et une décélération secondaire (S500) du compresseur (100) jusqu'à l'arrêt complet.

**3.** Procédé selon la revendication 2, où :

un intervalle temporel correspondant à la moitié d'une fréquence naturelle de vibration du compresseur s'écoule entre un temps de démarrage de décélération primaire du compresseur (100) jusqu'à un temps de démarrage de décélération secondaire du compresseur (100).

4.  Procédé selon la revendication 2, où :

    une troisième force d'excitation du compresseur (100) générée lors de la décélération primaire est supérieure à une quatrième force d'excitation du compresseur (100) générée lors de la décélération secondaire.

5.  Procédé selon la revendication 1, où la première et la deuxième force d'excitations sont générées par impulsions du courant alimentant le compresseur (100).

Fig. 1

(a)

COMPRESSOR
VELOCITY

——— VELOCITY COMMAND FOR COMPRESSOR
------- ACTUAL VELOCITY OF COMPRESSOR

START          OPERATING          STOP          time

[CONSTANT-VELOCITY COMPRESSOR]

(b)

COMPRESSOR
VELOCITY

——— VELOCITY COMMAND FOR COMPRESSOR
------- ACTUAL VELOCITY OF COMPRESSOR

START          OPERATING          STOP          time

[INVERTER COMPRESSOR]

Fig. 2

(a)

COMPRESSOR
VELOCITY

START    OPERATING    STOP    time

(b)

COMPRESSOR
EXCITING FORCE

OPERATING    time

(c)

COMPRESSOR
VIBRATION

(d)

PIPE STRESS

Fig. 3

Fig. 4

(a)
COMPRESSOR VELOCITY

FIRST INTERVAL(I)

SECOND INTERVAL(II)

TARGET OPERATING VELOCITY(Vp)

FIRST VELOCITY(V₁)

PRIMARY ACCELERATION    SECONDARY ACCELERATION    OPERATING    PRIMARY DECELERATION    SECONDARY DECELERATION    time

(b)
COMPRESSOR EXCITING FORCE

FIRST EXCITING FORCE(A)
SECOND EXCITING FORCE(B)

OPERATING    time

THIRD EXCITING FORCE(B')
FOURTH EXCITING FORCE(A')

(c)
SECOND WAVE(b')
COMPRESSOR VIBRATION
SECOND WAVE(b)

FIRST VIBRATION(C)
SECOND VIBRATION(D)

FIRST WAVE(a)
FIRST WAVE(a')
THIRD WAVE(c)

FOURTH VIBRATION(D')

THIRD VIBRATION(C')

(d)
PIPE STRESS

TOTAL STRESS(S)

t

1/2 OF NATURAL FREQUENCY OF COMPRESSOR VIBRATION

Fig. 5

(a)

COMPRESSOR
VELOCITY

PRIMARY        SECONDARY        OPERATING        PRIMARY        SECONDARY
ACCELERATION   ACCELERATION                      DECELERATION   DECELERATION

(b)

COMPRESSOR
CURRENT

OPERATING                                time

1/2 OF NATURAL FREQUENCY OF COMPRESSOR VIBRATION

Fig. 6

```
                    ┌─────────────┐
                    │    START    │
                    └──────┬──────┘
                           │
  ┌────────────────────────▼─────────────────────────────┐
  │  PRIMARILY ACCELERATE COMPRESSOR UP TO FIRST VELOCITY │──S100
  └────────────────────────┬─────────────────────────────┘
                           │
  ┌────────────────────────▼─────────────────────────────┐
  │ PRIMARILY ACCELERATE COMPRESSOR AND THEREAFTER,       │
  │ SECONDARILY ACCELERATE COMPRESSOR UP TO TARGET        │──S200
  │ OPERATING VELOCITY AFTER TIME AS LONG AS 1/2 OF       │
  │ NATURAL FREQUENCY OF COMPRESSOR VIBRATION ELAPSED     │
  └────────────────────────┬─────────────────────────────┘
                           │
  ┌────────────────────────▼─────────────────────────────┐
  │ OPERATING COMPRESSOR WHILE MAINTAINING TARGET         │──S300
  │ OPERATING VELOCITY                                    │
  └────────────────────────┬─────────────────────────────┘
                           │
  ┌────────────────────────▼─────────────────────────────┐
  │ PRIMARILY DECELERATE COMPRESSOR UP TO SECOND VELOCITY │──S400
  └────────────────────────┬─────────────────────────────┘
                           │
  ┌────────────────────────▼─────────────────────────────┐
  │ PRIMARILY DECELERATE COMPRESSOR AND THEREAFTER,       │
  │ SECONDARILY DECELERATE COMPRESSOR SO THAT COMPRESSOR  │──S500
  │ STOPS AFTER TIME AS LONG AS 1/2 OF                    │
  │ ·NATURAL FREQUENCY OF COMPRESSOR VIBRATION ELAPSED    │
  └────────────────────────┬─────────────────────────────┘
                           │
                    ┌──────▼──────┐
                    │     END     │
                    └─────────────┘
```

Fig. 7

(a)

ACCELERATION

$$\frac{1}{1+K} \qquad \frac{K}{1+K}$$

0       $\Delta T$      TIME

(b)

ACCELERATION

$$\frac{1}{1+2K+K^2} \qquad \frac{2K}{1+2K+K^2} \qquad \frac{K^2}{1+2K+K^2}$$

0      $\Delta T$      $2\Delta T$      TIME

(c)

ACCELERATION

$$\frac{1}{D} \qquad \frac{3K}{D} \qquad \frac{3K^2}{D} \qquad \frac{K^3}{D}$$

0      $\Delta T$      $2\Delta T$      $3\Delta T$      TIME

Fig. 8

(a)
ACCELERATION

(가)

(나)

$\dfrac{ak}{1+K}$

$\dfrac{a}{1+K}$

0    ΔT    T    ΔT+T    TIME

(b)
ACCELERATION

a

$\dfrac{ak}{1+K}$

$\dfrac{a}{1+K}$

0    ΔT    T    ΔT+T    TIME

**EP 2 759 788 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6206643 B1
- US 2009093911 A1